# EUROPEAN PATENT SPECIFICATION

(11) **EP 1 825 757 B1**
(45) Date of publication and mention of the grant of the patent: **26.05.2010**
(21) Application number: 05809185.1
(22) Date of filing: 21.11.2005
(51) Int. Cl.: A21D 10/00, A21D 13/08

(54) **BAKED CONFECTIONERY WITH LIGHT AND CRISPY TEXTURE**
BACKWAREN MIT LEICHTER UND KNUSPRIGER TEXTUR
DENRÉES CUITES AVEC UNE TEXTURE LÉGÈRE ET CROUSTILLANTE

(30) Priority: 22.11.2004 JP 2004337125
(43) Date of publication of application: 29.08.2007
(73) Proprietor: Kao Corporation, Chuo-ku Tokyo 103-8210 (JP)
(72) Inventor: KAMEO, Yoji, c/o Kao Corporation, Sumida-ku, Tokyo (JP); OGIWARA, Shinichi, c/o Kao Corporation, Sumida-ku, Tokyo (JP)
(74) Representative: HOFFMANN EITLE
(86) International application number: PCT/JP2005/021743
(87) International publication number: WO 2006/054802

(56) References cited:
- JP-A- 2 273 137
- JP-A- 9 224 550
- JP-A- 10 327 738
- JP-A- 11 018 670
- JP-A- 11 061 175
- JP-A- 58 183 030
- JP-A- 62 115 231

## Description

### Technical Field

The present invention relates to a baked confectionery as a bakery product.

### Background Art

As the palatability of consumers becomes diversified in recent years, there is an increasing demand for foods of a new type not restricted to the existing concept or for foods with a new texture, and in baked foods, a new texture is also desired as well.

For baked confectioneries (cookies, biscuits, etc.), light and crispy texture is conventionally desired, and baked confectioneries called soft cookies are particularly preferred. In soft cookies, the texture is made light and crispy by increasing the compounding ratio of fat, oil and sugar, and for example, techniques of adding an oil-in-water emulsion of edible fat and oil, carbohydrates, water and an emulsifier have been proposed (JP-A 10-327738).

As conventional techniques of using a thickener of polysaccharides etc., there are proposed techniques of using a thickener dispersed in a powdery state in wheat flour etc. (JP-A 9-224550, JP-A 11-276081), techniques of compounding thickening polysaccharides in fat and oil (JP-A 11-61175), and techniques of using a fat and oil composition containing a thickener and starch and having a specific gravity of 0.50 to 0.85 g/ml (JP-A 11-18670).

On the other hand, there are proposed techniques of dispersing a thickener in a fat and oil composition containing a water-in-oil emulsified composition and then incorporating the dispersion into baked confectioneries (JP-A 58-183030) and techniques of dispersing a thickener in liquid oil by using an activator and then incorporating the dispersion into bread (JP-B 3540313).

### Disclosure of the invention

The present invention provides a baked confectionery, obtainable by blending
5.5 to 72 parts by weight of (A) fat and oil,
0.001 to 2 parts by weight of (B) a humectant,
0.1 to 7 parts by weight (C) of an emulsifier, and
5 to 90 parts by weight (D) of sugars to form a mixture;
mixing air into the mixture to form a creamy composition; further mixing additional ingredients and 100 parts by weight of wheat flour in the creamy composition to obtain a dough; molding and baking the dough.

### Detailed description of the invention

In soft cookies, the texture can be made light and crispy as a confectionery by increasing the compounding ratio of fat, oil and sugar as described above, whereas the soft cookies suffer from disadvantages of being agglomerated and sticky in the mouth and of feeling gritty. Due to an increased amount of fat and oil, the soft cookies have problems in production such as a poor mold removability, oil exudation etc. , and become oily in taste and texture.

Accordingly, there are the techniques of using an emulsifier as described above, but due to the problem of workability, the amount of the emulsifier added is limited, thus making its effect insufficient.

In the techniques of using a thickener as described above, the thickener itself absorbs water and agglomerates during preparation of dough for a baked confectionery, thus lowering the efficiency of dispersion, so the staleness-preventing effect is not sufficiently exhibited, and agglomeration of the thickener causes an excellent texture to be hardly obtainable in some cases.

In the techniques of dispersing a thickener in a fat and oil composition containing a water-in-oil emulsified composition, the thickener cannot be prevented from contacting with water due to the presence of an aqueous phase in the fat and oil composition, so such techniques cannot be an effective improving method.

Accordingly, the present invention provides a baked confectionery having a light and crispy texture which does not form a lump in the mouth and are not gritty.

The fat and oil (A) used in the present invention may be those of animal or vegetable origin having plasticity, such as butter, lard, margarine, shortening, etc., or liquid oil, or various hydrogenated hardened oils thereof (solid fats) and transesterified oils thereof. The amount of the fat and oil (A) compounded is 5 to 72 parts by weight, preferably 8 to 50 parts by weight, even more preferably 10 to 40 parts by weight.

The fat and oil (A) used in the embodiment of the present invention is preferably a combination of (A1) fat and oil having a melting point of 25 to 50°C and (A2) liquid oil having a melting point 20°C or less.

Baked-goods dough having liquid oil or fat and oil to be melted at working temperature kneaded therein transduades an oil during operation and in an oven, to pollute the production line with the oil. It follows that as characteristics of the fat and oil, the melting point should be 25 to 50°C and is preferably 27 to 45°C, more preferably 30 to 40°C, and the state of the fat and oil at room temperature is semisolid or solid. The SFC (25°C) of the fat and oil (A) is preferably 5 to 40%, more preferably 10 to 35%, even more preferably 15 to 30%. As used herein, SFC is a solid fat content of fat and oil and measured with MARAN23 (Resonance Ltd.).

As the fat and oil, fat and oil of animal or vegetable origin, or their hydrogenated hardened oils (solid fats), and transesterified oils are used.

As specific fat and oil (A1) usable in the embodiment of the present invention, it is preferable to use animal oils such as tallow, lard and fish oil, and vegetable oils such as soybean oil, palm oil, palm kernel oil, cottonseed oil, peanut oil, rape oil, corn oil, safflower oil, sunflower oil, rice oil, etc.

From the viewpoint of workability and flavor, the amount of the fat and oil (A1) incorporated into 100 parts of wheat flour is preferably 5 to 55 parts by weight, more preferably 8 to 45 parts by weight, even more preferably 10 to 35 parts by weight. When the amount of the fat and oil (A1) is greater than 55 parts by weight, the product is liable to taste oily.

The liquid oil (A2) having a melting point of 20°C or less, which can be used in the embodiment of the present invention, is preferably vegetable fat and oil having a melting point of 20°C or less, out of rape oil, corn oil, soybean oil, palm oil, rice oil, fish oil, etc. Particularly, the liquid oil is preferably liquid oil having a melting point of 10°C or less, among which rape oil, corn oil, soybean oil and rice oil are preferable. Further, diacyl glycerol and middle-chain fatty acid-containing triglyceride and diglyceride can be preferably used as the liquid oil insofar as they satisfy the parameter of melting point as described above. The optimum compounding amount of the liquid oil (A2) having a melting point of 20°C or less is 0.5 to 17 parts by weight, preferably 1 to 10 parts by weight, based on 100 parts by weight of wheat flour.

The humectant (B) in the present invention includes protein, thickening polysaccharides, etc. To exhibit the staleness-preventing effect, the amount of the humectant added is 0.001 to 2 parts by weight, preferably 0.05 to 1.0 part by weight, based on 100 parts of wheat flour. When the amount of the humectant added is less than 0.001 part by weight, a sufficient staleness-preventing effect cannot be attained, while when the amount is higher than 2 parts by weight, the texture of the resulting baked confectionery is deteriorated.

The protein may be a substance showing viscosity when dissolved in water, and includes milk protein and plant protein. The milk protein includes sodium casein, calcium casein, rennet casein, milk casein, milk whey, lactalbumin, lactoglobulin, etc.

The thickening polysaccharides include gellan gum, karaya gum, tamarind seed gum, cod gum, glucomannan, xanthane gum, locust bean gum, pullulan, guar gum, iotacarrageenan, HM pectin, LM pectin, tragacanth gum, crystalline cellulose, PGA (propylene glycol alginate), SSHC (water-soluble soybean polysaccharide), gum ghatti, methyl cellulose, psyllium seed and cassia gum. These proteins and thickening polysaccharides may be used alone or as a mixture of two or more thereof. In respect of flavor and texture, xanthane gum, guar gum and locust bean gum are particularly preferable, and xanthane gum is more preferable.

The emulsifier (C) used in the present invention includes glycerin fatty esters, sucrose fatty esters, sorbitan fatty esters, propylene glycol fatty esters, lecithin and lecithin derivatives. Preferably, these materials are used as a mixture of two or more thereof.

It is preferable from the viewpoint (1) of the foam stability, with the emulsifier itself, of a creamy composition that the amount of the emulsifier (C) added is 0.1 to 6 parts by weight, preferably 0.1 to 5 parts by weight, based on 100 parts by weight of wheat flour, and when the liquid oil (A2) is used, it is preferable from the viewpoint (2) of improving the texture or taste of baked confectionery (taste or crispiness as a confectionery, difficulty in clumping of the ingredients, absence of a gritty feel) that the humectant (B) in a powdery state is fixed and dispersed in the liquid oil (A2), resulting in improvements in the texture.

As the emulsifier (C), glycerin fatty esters and propylene glycol fatty esters are preferably used from the above-mentioned viewpoint (1). The glycerin fatty esters which can be used in the embodiment of the present invention are esters between glycerin and fatty acid or derivatives thereof, and it is preferable to use glycerin fatty monoester (usually called monoglyceride), glycerin fatty diester, glycerin organic fatty monoester, polyglycerin fatty monoester, polyglycerin condensed linoleic ester, etc. The propylene glycol fatty esters which can be used in the embodiment of the present invention are esters between propylene glycol and fatty acid and are used preferably in the form of a monoester or diester. In particular, the glycerin fatty monoester and propylene glycol fatty monoester are preferable from the above-mentioned viewpoint (1), and these are more preferably simultaneously used. That is, the total of the glycerin fatty monoester and propylene glycol fatty monoester in the emulsifier is 80 wt% or more, and the glycerin fatty ester/propylene glycol fatty monoester ratio by weight = 1/0.5 to 2, preferably a ratio of almost 1/1. The liquid oil (A2) having a melting point 20°C or less/emulsifier (C) ratio by weight is 6.5 or less (value obtained by dividing the amount of the incorporated liquid oil by the amount of the incorporated emulsifier), preferably 1.7 to 6.5, more preferably 2.0 to 6.5, even more preferably 3.0 to 6.5, from the above-mentioned viewpoint (2). That is, the liquid oil (A2) can be in such a hardened state as to lose mobility, and the humectant (B) in a powdery state dispersed in the same liquid oil can be uniformly fixed and dispersed without precipitation.

In the embodiment of the present invention, the degree of penetration can be defined as a measure indicative of the hardened state of the liquid oil losing mobility.

According to the measurement of the degree of penetration described inASTM-D217 ("ASTM Penetration Measurement Method", D217 in the Annual Book of Standards 1994, Section 5, Volume 05.01), the degree of penetration is a value measured in the following manner. That is, the fat and oil composition is packed in a container of length 115 mm × width 115 mm × depth 90 mm, and its surface is flattened. The sample is left at measurement temperature (20°C) for 30 minutes, and then a needle (penetrometer cone) equipped with an 102.5 g conical loading is contacted with the surface of the sample, and after 5 seconds, the distance by which the needled penetrated is indicated in the unit of 0.1 mm. A smaller degree of penetration is indicative of higher hardness of a sample measured. In the present invention, the degree of penetration is 200 or less, more preferably 100 or less, in order that the fat and oil composition is in a hardened state without mobility.

The glycerin fatty monoester is particularly preferably used from the above-mentioned viewpoint (1). For effectively exhibiting the foam stabilization effect of the creamy composition, the glycerin fatty monoester is compounded in an amount of preferably 5 to 20 parts by weight, more preferably 7 to 15 parts by weight. When the glycerin fatty monoester is in this range, the foam stabilization effect on dough for baked confectionery is higher than when another emulsifier is used. From the above-mentioned viewpoint (2), the propylene glycol fatty monoester is compounded in an amount of preferably 5 to 20 parts by weight, more preferably 7 to 15 parts by weight.

The fatty acid as a constituent ingredient of the glycerin fatty ester and propylene glycol fatty ester usable in the embodiment of the present invention includes C12 to C22 saturated or unsaturated fatty acids such as lauric acid, myristic acid, palmitic acid, stearic acid, oleic acid, behenic acid etc., among which the saturated fatty acids are particularly preferable, and C14 to C22 saturated fatty acids are more preferable. The ester may be constituted from one of these fatty acids, but may be a mixture constituted from two or more fatty acids.

The glycerin organic fatty monoester mentioned in one form of the glycerin fatty ester is a compound wherein an OH group in position 3 of the glycerin fatty monoester has been esterified with an organic acid. The organic acid includes aliphatic monocarboxylic acids constituted of lower fatty acids, such as acetic acid, propionic acid, butyric acid, etc. , aliphatic saturated dicarboxylic acids such as oxalic acid, succinic acid, etc., aliphatic unsaturated dicarboxylic acids such as maleic acid, fumaric acid, etc., oxy acids such as lactic acid, malic acid, tartaric acid, diacetyl tartaric acid, citric acid, etc., and amino acids such as glycine, aspartic acid etc. Particularly, citric acid, succinic acid, tartaric acid, and diacetic tartaric acid are preferable, and those having an HLB of 4 to 14 are preferable.

Commercial glycerin organic fatty esters partially contain unreacted organic acids or glycerin fatty monoesters, and such commercial glycerin organic fatty monoesters can also be used in the present invention.

Specific examples of the polyglycerin constituting the polyglycerin fatty monoester usable in the embodiment of the present invention include one or more compounds selected from the group consisting of tetraglycerin, pentaglycerin, hexaglycerin, heptaglycerin, nonaglycerin and decaglycerin. Particularly, those having a glycerin's polymerization degree of 1 to 9 are preferable.

The polyglycerin condensed ricinoleic ester usable in the embodiment of the present invention is an ester between polyglycerin and condensed ricinoleic acid, and usually a mixture of mono- or di-ester of polyglycerin having a glycerin polymerization degree of 2 to 3 and condensed ricinoleic acid having 3 to 5 ricinoleic acid molecules condensed therein is used.

The sucrose fatty ester usable in the embodiment of the present invention is an ester of sucrose and fatty acid, and includes mono-, di-, tri- and poly-esters, and its constituent fatty acid is one of C12 to C24 fatty acids or a mixture of two or more of such fatty acids. Those having an HLB of 5 to 15 are preferable.

The sorbitan fatty ester usable in the embodiment of the present invention is an ester of sorbitan and fatty acid, and its constituent fatty acid is one of C12 to C24 fatty acids or a mixture of two or more of such fatty acids. The sorbitan fatty ester includes monoesters and triesters, among which the monoesters are preferable in the embodiment of the present invention.

Lecithin used in the embodiment of the present invention is a phospholipid mixture containing phosphatidyl choline, phosphatidyl ethanolamine, phosphatidyl inositol, phosphatidic acid, etc., and its typical example is lecithin obtained from soybean, yolk or the like. The lecithin derivatives include lysolecithin, lysophosphatidic acid, etc.

For the sugars (D) used in the present invention, any sugar which can be typically used in bread can be used. Specific examples include monosaccharides such as glucose, fructose, galactose etc., polysaccharides such as maltose, sucrose, maltose, starch syrup, isomerized sugar, invert sugar, cyclodextrin, branched cyclodextrin, dextrin etc., reducing sugar such as starch hydrolysates, sugar alcohols such as sorbitol, maltitol, xylitol, etc., sucralose, aspartame, acesulfame potassium, etc. can be used, and these can be used singly or as a mixture of two or more thereof.

From the viewpoint of workability and flavor, the amount of sugars incorporated into the product of the present invention, in terms of the amount of sugars in the dough for baked confectionery, is preferably 5 to 90 parts by weight, more preferably 10 to 80 parts by weight, even more preferably 20 to 70 parts by weight, based on 100 parts by weight of wheat flour.

The baked confectionery of the present invention is obtainable by blending 5 to 72 parts by weight of (A) fat and oil, 0.001 to 2 parts by weight of (B) a humectant, 0.1 to 6 parts by weight (C) of an emulsifier, and 5 to 90 parts by weight (D) of sugars to form a mixture; mixing air into the mixture to form a creamy composition; further mixing additional ingredients and 100 parts by weight of wheat flour in the creamy composition to provide a dough; and molding and baking the dough. By production in this procedure, the effect of the above-mentioned (1) can be obtained, the humectant (B) has a difficulty in contact with water, and the texture of baked confectionery (crispy feel, difficulty in clumping, absence of gritty feel) can be improved.

In the present invention, it is preferable that (E) a fat and oil composition is prepared in advance by mixing (A2) liquid oil having a melting point of 20°C or less, (B) a humectant and (C) an emulsifier, then 1 to 20 parts by weight of the fat and oil composition (E), 5 to 55 parts by weight of (A1) fat and oil having a melting point of 25 to 50°C, and 5 to 90 parts by weight of (D) sugars to form a mixture, mixing air into the mixture to form a creamy composition, further mixing additional ingredients and 100 parts by weight of wheat flour in the creamy composition to provide a dough, and molding and baking the dough. From the above-mentioned viewpoints (1) and (2), the fat and oil composition (E) is prepared so as to contain 50 to 85 parts by weight of (A2) liquid oil having a melting point of 20°C or less, 0.1 to 10 parts by weight of (B) a humectant and 10 to 35 parts by weight of (C) an emulsifier wherein the (A2)/(C) ratio by weight is 6.5 or less.

From the above-mentioned viewpoint (2), the amount of the emulsifier (C) incorporated into the fat and oil composition is 14 to 26 parts by weight, while the (A2)/(C) ratio by weight is 6.5 or less. When the emulsifier (C) in the fat and oil composition (E) is incorporated into baked confectionery, a necessary amount of the additional emulsifier (C) can be incorporated separately from the fat and oil composition (E) into baked confectionery.

In the embodiment of the present invention, the fat and oil composition (E) may be prepared by compounding (A1) fat and oil having a melting point of 25 to 50°C with (D) sugars and allowing the mixture to contain air, thereby preparing a creamy composition, followed by blending with additional ingredients, and from the above-mentioned viewpoints (1) and (2), it is preferable that the ingredients (A1) and (D) are blended together to prepare a creamy composition.

In the fat and oil composition (E) in the embodiment of the present invention, a preservative, a pH adjusting agent, a colorant, a flavor, etc. may be suitably used as other ingredients.

Specifically, the process for producing the fat and oil composition (E) includes first heating the ingredients (A2) and (C) at a temperature not lower than the melting points of the respective ingredients, to melt them uniformly, then adding the ingredient (B), and stirring the mixture uniformly The resulting uniform mixture is cooled to a temperature not higher than the melting points of the respective ingredients, preferably to 30°C or less, whereby the desired fat and oil composition is obtained. The rate of cooling is preferably higher. That is, when the emulsifier is crystallized by cooling, rapid cooling is more preferable than gradual cooling because coarse crystals of the emulsifier are not formed, thus improving the dispersibility of the emulsifier itself and promoting the staleness-preventing effect. In the production described above, a container itself containing the uniform mixture at a high temperature may be externally cooled in order to cool the uniform mixture. It is generally preferable for quality that the mixture is cooled rapidly with such as a chilling machine, Votator, Kombinator, used in production of shortening or margarine.

In the embodiment of the present invention, it is preferable from the above-mentioned viewpoints (1) and (2) that the fat and oil composition (E) when used in preparation of baked confectionery is incorporated in an amount of preferably 1 to 20 parts by weight, more preferably 3 to 10 parts by weight, into 100 parts by weight of wheat flour used in baked confectionery.

The wheat flour used mainly in the present invention is weak flour. Generally, the classification of wheat flour is defined by the amount of protein in the wheat flour, and the amount of protein is prescribed to be 6.5 to 8.0% in the weak flour.

The amount of starch in the wheat flour used in the embodiment of the present invention is 65 to 78 parts by weight, preferably 68 to 75 parts by weight, more preferably 69 to 72 parts by weight, relative to 100 parts by weight of the wheat flour.

The raw material of the baked confectionery in the present invention includes not only wheat flour as the main material, but also yeast, yeast food, water, modified starch, dairy products, common salt, seasonings (sodium glutamate and nucleic acids), a preservative, reinforcing agents such as vitamins, calcium, etc., protein, amino acids, chemical expanding agents, flavors, etc., as necessary. Further, dried fruits such as raisin, wheat flour bran, whole grain powder and chocolate, which are generally easily aged when used as the raw material, can be suitably used.

If there is no problem in foam stability at the time of preparation of the creamy composition, suitable addition of common salt, water, flavors etc. is not problematic.

In the embodiment of the present invention, use of modified starch is preferable from the viewpoint of improving the texture (crispy feel, difficulty in clumping, absence of gritty feel). Specific examples of the modified starch include acetylated starch, hydroxypropylated starch, starch octenylsuccinate, acetylated crosslinked starch adipate, acetylated crosslinked starch phosphate, starch acetate, oxidized starch, crosslinked starch monophosphate, starch phosphate, crosslinked starch phosphate, hydroxypropylated crosslinked starch phosphate etc., among which acetylated starch, hydroxypropylated starch and starch octenylsuccinate are preferable from the viewpoint of a simple procedure from starch, a relatively inexpensive production with a high purity and of improvement in flavor and texture. From the viewpoint of improving flavor and texture (crispy feel, difficulty in clumping, absence of gritty feel), the amount of the modified starch blended is preferably 5 to 50 parts by weight, more preferably 10 to 40 parts by weight, even more preferably 15 to 30 parts by weight, based on 100 parts by weight of wheat flour.

The acetylated starch can be obtained by acetylating starch or modified starch in a usual manner. Specifically, the acetylated starch can be obtained by reacting acetic anhydride or vinyl acetate with starch. It is also possible to employ commercial products such as Z-700 (derived from tapioca, Nippon Starch Chemical Co., Ltd.), Sakura (derived from tapioca, Matsutani Chemical Industry, Co., Ltd.) MT-01B (derived from tapioca, Nihon Shokuhin Kako Co., Ltd.), ADIX-H (derived from waxy corn, Nihon Shokuhin Kako Co., Ltd.) and MAPS #449 (derived from waxy corn, Nihon Shokuhin Kako Co., Ltd.). The degree of acetylation, in terms of acetyl value (number of acetyl groups per anhydrous glucose residue in starch), is preferably 0.001 to 1, more preferably 0.005 to 0.5, even more preferably 0.01 to 0.1.

The hydroxypropylated starch can be obtained by hydroxypropylating starch or modified starch in a usual manner. Specifically, the hydroxypropylated starch can be obtained by reacting propylene oxide with starch. It is also possible to employ commercial products such as National Frijex (derived from tapioca, National Starch & Chemical), Yuri (derived from tapioca, Matsutani Chemical Industry, Co., Ltd.), National 1658 (derived from corn, National Starch & Chemical), Psalm Flow (derived from waxy corn, National Starch & Chemical) and Psalm Tex (derived from waxy corn, National Starch & Chemical) . The degree of hydroxypropylation, in terms of the degree of substitution (number of hydroxypropyl groups per anhydrous glucose residue in starch), is preferably 0.001 to 1, more preferably 0.05 to 0.5, even more preferably 0.1 to 0.3.

The starch octenylsuccinate can be obtained by reacting octenylsuccinic acid with starch or modified starch in a usual manner. Specifically, the starch octenylsuccinate can be obtained by reacting octenylsuccinic anhydride with starch. It is also possible to employ commercial products such as Alcohol Nyuka (derived from tapioca, Nippon Starch Chemical Co., Ltd.). The degree of octenylsuccination, in terms of octenylsuccinic acid value (number of octenylsuccinic acid groups per anhydrous glucose residue in starch), is preferably 0.001 to 1, more preferably 0.005 to 0.5, further more preferably 0.01 to 0.1.

The modified starch may be converted into another modified starch by combination with other processing treatments. The processing treatments which can be combined include esterification treatment with acetic acid, phosphoric acid etc., etherification treatment by hydroxypropylation, carboxymethyl etherification etc., crosslinking treatment with usual crosslinking agents such as trimetaphosphate, hexametaphosphate, phosphorus oxychloride, adipic acid, epichlorohydrin etc., oxidation treatment, acid treatment, bleaching treatment, heated moisture treatment, heat treatment, enzyme treatment etc., among which one or more kinds of treatments may be used in combination. In particular, the esterification treatment is preferable and the phosphate treatment is preferable, more preferably the phosphate crosslinking treatment. The degree of phosphate treatment, in terms of the content of bound phosphorus, is in the range of 0.0001 to 2%, preferably 0.0001 to 0.5%, more preferably 0.0001 to 0.2%, from the viewpoint of improving flavor and texture (crispy feel, difficulty in clumping, absence of gritty feel).

The baked confectionery of the present invention are preferably cookies, biscuits, etc., more preferably soft cookies and soft biscuits compounded with a large amount of fat, oil and sugar. Generally, soft cookies are compounded with at least 40 parts by weight of fat, oil and sugar in total, based on 100 parts by weight of wheat flour.

In the process for producing baked confectionery in the embodiment of the present invention, it is preferable to use a rotary, cutting embossing, wire cutting, root presto and deposit, among which a rotary is preferable for soft cookies and soft biscuits because of their stable product shape.

### Examples

### [Preparation of Fat and Oil Composition]

Compositions of the fat and oil compositions a to e used in the present invention and measurement results of the degrees of penetration are shown in Table 1. The method of preparing the fat and oil compositions is as follows:
1) The ingredients (A2) or (A1) and (B) were weighed in a stainless steel beaker having a volume of 2 liters.
2) The above-mentioned 1) was uniformly dissolved in a water bath at 85°C and left for 30 minutes.
In this step, agitation was carried out using an anchor hook and a three-one motor (TYPE60G manufactured by HIDON Co., Ltd.).
3) The previously weighed ingredient (C) was added, while stirring, to the above-mentioned 2), and after it was confirmed that the mixture became uniform, the mixture was left for 30 minutes.
4) In the above-mentioned 3), a large amount of ice was placed in the water bath to cool the mixture to 30°C, and the mixture was kept at a temperature of 30°C and simultaneously stirred, and then transferred to a predetermined container.
5) The above-mentioned 4) was left overnight (for about 12 hours) in a thermostatic bath at 15°C, and then measured for the degree of penetration and evaluated for bread manufacturing.

**Table 1**

| | Composition | Fat and oil composition | | | | |
|---|---|---|---|---|---|---|
| | (%) | a | b | c | d | e |
| (A) | Purified rape oil (melting point 10°C or less) | 80.9 | 75.6 | 80.0 | - | 80.6 |
| | Commercial vegetable shortening ( melting point 37°C) | - | - | - | 80.9 | - |
| (B) | Xanthane gum ( Bistop D-3000 : Manufactured by San-Ei Gen F.F.I, Inc.) | 2.5 | - | - | 2.5 | - |
| | Guar gum(Bistop D-20 : Manufactured by San-Ei Gen F.F.I ,Inc.) | - | 5.4 | - | - | - |
| | Locust bean gum(Bistop D-6 : Manufactured by San-Ei Gen F.F.I ,Inc.) | - | - | 1.0 | - | - |
| (C) | Glycerine fatty monoester(Excel T-95 : manufactured by KaoCorp.) | 7,8 | 8.0 | 8.0 | 7.8 | 8.2 |
| | Propylene glycolmonobehenic acid ester (PGMB : manufactured by Kao Corp.) | 7.8 | 8.0 | 8.0 | 7.8 | 8.2 |
| | Polyglycerine condenced ricinoleic acid ester (Sun Soft 818SK : maniufactured by Taiyo Kagaku Corp.) | - | 2.0 | 2.0 | - | 2.0 |
| | Soybean lecithin (Nissin lecithin Dx : manufactured by Nissin Oillio Group,Ltd.) | 1.0 | 1.0 | 1.0 | 1.0 | 1.0 |
| (A 2) / (C) ratio by weight | | 4.9 | 4.0 | 4.2 | - | 4.2 |
| (A1) / (C) ratio by weight | | - | - | - | 4.9 | - |
| Degree of penetration | | 43 | 40 | 61 | 13 | 40 |

Examples 1 to 7 and Comparative Examples 1, 2 and 5 wherein the fat and oil compositions a to e had been compounded, Comparative Example 3 wherein the fat and oil composition had not been compounded, and Comparative Example 4 wherein the method of producing cookies had been changed were evaluated for soft cookies. The cookie compositions evaluated are shown in Table 2.

### [Conditions for production of soft cookies]

### 1. Conditions (X) for preparation of dough

Using a mixer (N-50 model: 5 coats, manufactured by Hobart K.K.) and a beater, shortening, the fat and oil composition (a, b, c, d or e), sugar and common salt in the compounding amounts shown in Table 2 were weighed out and introduced into the mixer and kneaded at low speed for 30 seconds and then at moderate speed for 2 minutes, and the materials adhering to the mixer wall were once scraped off and dropped in the mixer, the mixture was stirred at moderate speed until the specific gravity reached 0.7, to provide an air-containing creamy composition. While the creamy composition was stirred at low speed for 30 seconds, egg, water and ammonium bicarbonate were added thereto, and the mixture was further stirred for 1 minute. Weak flour was further introduced into the mixer and the mixture was stirred for 45 seconds to provide cookie dough.

### 2. Conditions (Y) for preparation of dough

Cookie dough was obtained under the same conditions as in production of the dough described above except that the fat and oil composition a was added together with egg, water and ammonium bicarbonate.

### 3. Conditions (Z) for preparation of dough

Using a mixer (N-50 model: 5 coats, manufactured by Hobart K.K.) and a beater, the fat and oil composition c and all the materials in the compounding amounts shown in Table 2 were introduced into the mixer and stirred at low speed for 30 seconds and then at moderate speed for 2 minutes, and the materials adhering to the mixer wall were once scraped off and dropped in the mixer and the mixture was stirred at high speed for 10 minutes, to provide cookie dough.

### 4. Conditions for molding and baking the dough

The cookie dough described above was rolled out to a thickness of 4 mm and then punched out with a round pastry cutter of 50 mm in diameter. The dough thus punched out was placed on a baking sheet and baked for 8 minutes in an oven (baking temperature, upper flame 200°C/lower flame 180°C). After baking, the dough was cooled at 20°C for 15 minutes, then placed together with a desiccating agent (silica gel) in a vinyl bag, sealed, stored at 20°C for 7 days, and evaluated as a bread sample.

The cookie samples in the Examples and Comparative Examples were subjected to sensory evaluation.

### [Sensory Evaluation of the Cookies]

Monadic evaluation for crispy feel and difficulty in clumping, upon eating of the cookies, was carried out by a panel of 10 persons under the following criteria:
4: Judged to be excellent by at least 8 of 10 persons.
3: Judged to be excellent by 5 to 7 of 10 persons.
2: Judged to be excellent by 3 to 4 of 10 persons.
1: Judged to be not excellent by at least 8 of 10 persons.

These results are shown in Table 3.

**Table 2**

| | Example | | | | | | | Comparative example | | | | |
|---|---|---|---|---|---|---|---|---|---|---|---|---|
| | 1 | 2 | 3 | 4 | 5 | 6 | 7 | 1 | 2 | 3 | 4 | 5 |
| Used fat and oil composition | a | a | a | b | c | a | a | d | e | - | c | - |
| Commercial vegetable shortening ( melting point 37°C) | 200 | ← | ← | ← | ← | ← | 175 | 200 | ← | ← | ← | 175 |
| Sugar | 200 | ← | ← | ← | ← | ← | 150 | 200 | ← | ← | ← | 150 |
| Salt | 5 | ← | ← | ← | ← | ← | ← | ← | ← | ← | ← | ← |
| Fat and oil composition | 5 | 25 | 100 | 25 | 25 | 25 | 5 | 25 | 25 | 0 | 25 | 0 |
| Whole egg | 50 | ← | ← | ← | ← | ← | 75 | 50 | ← | ← | ← | 75 |
| Water | 25 | ← | ← | ← | ← | ← | 50 | 25 | ← | ← | ← | 50 |
| Ammonium bicarbonate | 1.5 | ← | ← | ← | | ← | ← | ← | ← | ← | ← | ← |
| Wheat flour (weakflour) | 500 | ← | ← | ← | ← | ← | 400 | 500 | ← | ← | ← | ← |
| Modified starch *1 starch | 0 | 0 | 0 | 0 | 0 | 0 | 100 | 0 | 0 | 0 | 0 | 0 |
| Condition for production of dough | X | X | X | X | X | Y | X | X | X | X | Z | X |

| | | | | | | | | | | | | |
|---|---|---|---|---|---|---|---|---|---|---|---|---|
| Numerical values in the table are expressed in parts by weight. *1: Sakura (acetylated tapioca starch, Matsutani Chemical Industry, Co., Ltd.) | | | | | | | | | | | | |

**Table 3**

| | Example | | | | | | | Comparative example | | | | |
|---|---|---|---|---|---|---|---|---|---|---|---|---|
| | 1 | 2 | 3 | 4 | 5 | 6 | 7 | 1 | 2 | 3 | 4 | 5 |
| Crispy feel | 3 | 4 | 4 | 4 | 4 | 3 | 3 | 2 | 3 | 2 | 2 | 2 |
| Difficulty in clumping | 3 | 4 | 3 | 3 | 4 | 3 | 4 | 1 | 1 | 2 | 2 | 2 |

As described above, baked confectionery produced by using dough obtained by blending fat and oil, a humectant, an emulsifier and sugars in amounts within the range of the present invention, allowing it to contain air thereby producing a creamy composition, and compounding the composition with wheat flour etc. were found to improve crispy feel and difficulty in clumping. Baked confectionery produced by using the dough obtained by combining modified starch as a part of wheat flour were found to be further improved in respect of difficulty in clumping.

## Claims

1. Baked confectionery, obtainable by blending
5.5 to 72 parts by weight of (A) fat and oil,
0.001 to 2 parts by weight of (B) a humectant,
0.1 to 7 parts by weight (C) of an emulsifier, and
5 to 90 parts by weight (D) of sugars to form a mixture;
mixing air into the mixture to form a creamy composition; further mixing additional ingredients and 100 parts by weight of wheat flour in the creamy composition to obtain a dough; molding and baking the dough.

2. The baked confectionery according to claim 1, wherein the fat and oil (A) is obtainable by blending 5 to 55 parts by weight of (A1) fat and oil having a melting point of 25 to 50°C with 0.5 to 17 parts by weight of (A2) liquid oil having a melting point of 20°C or less.

3. The baked confectionery according to claim 1 or 2, which is obtainable by preparing (E) a fat and oil composition comprising 50 to 85 parts by weight of (A2) liquid oil having a melting point 20°C or less, 0.1 to 10 parts by weight of (B) a humectant and 10 to 35 parts by weight of (C) an emulsifier wherein the (A2)/(C) ratio is 6.5 or less, then blending
5 to 55 parts by weight of (A1) fat and oil having a melting point of 25 to 50°C,
5 to 90 parts by weight of (D) sugars, and
1 to 20 parts by weight of the fat and oil composition (E) to form a mixture;
mixing air into the mixture to form a creamy composition; further mixing additional ingredients and 100 parts by weight of wheat flour in the creamy composition to obtain a dough; molding and baking the dough.

4. The baked confectionery according to any of claims 1 to 3, wherein the baked confectionery is a cookie or biscuit.

## Patentansprüche

1. Gebackenes Konfekt, erhältlich durch Mischen von
5,5 bis 72 Gew.-Teilen von (A) Fett und Öl,
0,001 bis 2 Gew.-Teilen von (B) einem Feuchthaltemittel,
0,1 bis 7 Gew.-Teilen von (C) einem Emulgator und
5 bis 90 Gew.-Teilen von (D) Zuckern, wodurch eine Mischung gebildet wird;
Einmischen von Luft in die Mischung, wodurch eine cremige Zusammensetzung gebildet wird; weiteres Einmischen von zusätzlichen Zutaten und 100 Gew.-Teilen Weizenmehl in die cremige Zusammensetzung, wodurch ein Teig erhalten wird; und Formen und Backen des Teiges.

2. Gebackenes Konfekt gemäß Anspruch 1, wobei das Fett und Öl (A) erhältlich ist durch Mischen von 5 bis 55 Gew.-Teilen von (A1) Fett und Öl mit einem Schmelzpunkt von 25 bis 50°C mit 0,5 bis 17 Gew.-Teilen von (A2) flüssigem Öl mit einem Schmelzpunkt von 20°C oder weniger.

3. Gebackenes Konfekt gemäß Anspruch 1 oder 2, erhältlich durch Zubereitung einer Fett- und Öl-Zusammensetzung (E), die 50 bis 85 Gew.-Teile von (A2) flüssigem Öl mit einem Schmelzpunkt von 20°C oder weniger, 0,1 bis 10 Gew.-Teile eines Feuchthaltemittels (B) und 10 bis 35 Gew.-Teile eines Emulgators (C) enthält, wobei das Verhältnis (A2)/(C) 6,5 oder weniger beträgt, und anschließendes Beimischen von
5 bis 55 Gew.-Teilen von (A1) Fett und Öl mit einem Schmelzpunkt von 25 bis 50°C,
5 bis 90 Gew.-Teilen von (D) Zuckern und
1 bis 20 Gew.-Teilen der Fett- und Ölzusammensetzung (E), wodurch eine Mischung zu gebildet wird;
Einmischen von Luft in die Mischung, wodurch eine cremige Zusammensetzung gebildet wird; weiteres Einmischen von zusätzlichen Zutaten und von 100 Gew.-Teilen Weizenmehl in die cremige Zusammensetzung, wodurch ein Teig erhalten wird; und Formen und Backen des Teiges.

4. Gebackenes Konfekt gemäß mindestens einem der Ansprüche 1 bis 3, wobei das gebackene Konfekt ein Keks oder Plätzchen ist.

## Revendications

1. Friandise cuite au four, pouvant être obtenue en mélangeant
5,5 à 72 parties en poids de (A) une graisse et une huile,
0,001 à 2 parties en poids de (B) un humectant,
0,1 à 7 parties en poids (C) d'un émulsifiant, et
5 à 90 parties en poids (D) de sucres pour former un mélange ;
en mélangeant de l'air dans le mélange pour former une composition crémeuse ;
en mélangeant en outre des ingrédients additionnels et 100 parties en poids de farine de blé dans la composition crémeuse pour obtenir une pâte ;
en moulant et en cuisant la pâte au four.

2. Friandise cuite au four selon la revendication 1, dans laquelle le mélange de graisse et d'huile (A) peut être obtenu en mélangeant 5 à 55 parties en poids de (A1) une graisse et une huile ayant un point de fusion de 25 à 50°C avec 0,5 à 17 parties en poids de (A2) une huile liquide ayant un point de fusion de 20°C ou moins.

3. Friandise cuite au four selon la revendication 1 ou 2, qui peut être obtenue en préparant (E) une composition de graisse et d'huile comprenant 50 à 85 parties en poids de (A2) une huile liquide ayant un point de fusion de 20°C ou moins, 0,1 à 10 parties en poids de (B) un humectant et 10 à 35 parties en poids de (C) un émulsifiant dans laquelle le rapport (A2)/(C) est 6,5 ou moins, ensuite en mélangeant
5 à 55 parties en poids de (A1) une graisse et une huile ayant un point de fusion de 25 à 50°C,
5 à 90 parties en poids (D) de sucres, et
1 à 20 parties en poids de la composition de graisse et d'huile (E) pour former un mélange ;
en mélangeant de l'air dans le mélange pour former une composition crémeuse ;
en mélangeant en outre des ingrédients additionnels et 100 parties en poids de farine de blé dans la composition crémeuse pour obtenir une pâte ;
en moulant et en cuisant la pâte au four.

4. Friandise cuite au four selon l'une quelconque des revendications 1 à 3, dans laquelle la friandise cuite au four est un cookie ou un biscuit.
